Europäisches Patentamt

European Patent Office

Office européen des brevets

(19)

(11) Veröffentlichungsnummer : **0 347 379 B1**

## (12) EUROPÄISCHE PATENTSCHRIFT

(45) Veröffentlichungstag der Patentschrift :
07.07.93 Patentblatt 93/27

(51) Int. Cl.⁵ : **C03C 8/12, C03C 3/064**

(21) Anmeldenummer : **89810424.5**

(22) Anmeldetag : **05.06.89**

(54) **Bleifreie Glasfrittenzusammensetzungen.**

(30) Priorität : **13.06.88 US 206250**

(43) Veröffentlichungstag der Anmeldung :
**20.12.89 Patentblatt 89/51**

(45) Bekanntmachung des Hinweises auf die
Patenterteilung :
**07.07.93 Patentblatt 93/27**

(84) Benannte Vertragsstaaten :
**DE FR GB IT NL**

(56) Entgegenhaltungen :
FR-A- 627 067
US-A- 2 942 992
US-A- 4 554 258

(73) Patentinhaber : **CIBA-GEIGY AG**
**Klybeckstrasse 141**
**CH-4002 Basel (CH)**

(72) Erfinder : **Reinherz, Barry P.**
**105 Lexington Drive**
**Lawrence, PA 15055 (US)**

**Beschreibung**

Dekorüberzugmassen für Glas-, Glas-Keramik-, Porzellan- und Keramikware werden im allgemeinen in drei Kategorien eingeteilt: Glasuren, Porzellanemails und Glasemails. Solche Überzüge oder Verzierungen werden gewöhnlich bei Raumtemperatur auf einen Gegenstand aufgetragen, dann gebrannt um sie mit der Oberfläche des zu überziehenden oder zu verzierenden Gegenstandes zu verschmelzen. Solche Überzüge zeichnen sich dadurch aus, dass sie nicht porös und somit für verschiedene Chemikalien und Lösungen undurchlässig sind.

Glasuren dienen im allgemeinen für den Überzug von Keramikware zu Dekorationszwecken. Es kann sich dabei um einen transparenten glasigen Überzug oder um einen durch Zusatz von Pigment gefärbten Überzug handeln. Die Glasuren können nach verschiedenen Methoden, wie z.B. Tauchen, Spritzen oder Siebdruck, aufgetragen werden.

Je nach Auftragsverfahren werden auch Bindemittel, um die Haftung der Glasur zu gewährleisten, eingesetzt, Diese werden beim Einbrennen der Glasur verflüchtigt und es bleiben nur Fritte und Pigment zurück. Die typischen Ingredientien einer Glasur sind nämlich: Ein glasiges feinteiliges Pulver, genannt Fritte; ein Pigment (oder mehrere), das genügend hitzebeständig sein muss, um die Einbrenntemperaturen zu widerstehen, und das als Färbe- oder Deckmittel eingesetzt ist, und ein Bindemittel, wie z.B. Wasser, mit oder ohne Zusätze, eine organische Flüssigkeit, ein thermoplastisches Harz, u.s.w. Die feinverteilten pulvrigen Ingredienten (Fritten und Pigmente) werden gewöhnlich im Bindemittel zu einer Aufschlämmung oder Paste dispergiert oder suspendiert. Die Aufschlämmung kann zum Beispiel zum Spritzen oder Eintauchen verwendet werden, die Paste dient für den Siebdruck oder zahlreichen anderen Auftragsmethoden.

Porzellanemails und Glasemails unterscheiden sich in verschiedener Hinsicht von den Glasuren, so zum Beispiel in der Art der Gegenstände, auf denen sie aufgetragen werden, in der Methode mit der sie aufgetragen werden und in den Temperaturbereichen bei welchen sie eingebrannt werden.

Eine ganze Reihe von Dekorüberzugsmassen für die Verzierung von Glas-, Porzellan- und Keramikware ist erhältlich. Sehr oft enthalten diese Produkte Blei- und/oder Cadmiumoxide. Bleioxid wurde früher eingesetzt, um den Erweichungspunkt der Fritte zu erniedrigen, damit die Fritte bei so tiefen Temperaturen wie nur möglich in die Oberfläche der Ware eingebrannt werden konnte, um eine thermische Verformung der Gegenstände zu vermeiden. Cadmiumoxid wurde in frühreren Zeiten als Farbkörper in bestimmten Glasfritten eingesetzt. Ungünstige toxikologische Auswirkungen dieser Substanzen haben inzwischen zum Verbot der Verwendung von Blei- und Cadmiumverbindungen in Dekorüberzugsmassen geführt. Es stellte sich deshalb die Aufgabe, neue Glasfrittenzusammensetzungen mit gleichen oder verbesserten Eigenschaften bereitzustellen, die keine Blei- bzw. Cadmiumkomponenten enthalten.

Eine Anzahl von bleifreien Produkten dieser Art sind in der Literatur bereits vorgeschlagen worden. Die US-PS 4 376 169 beschreibt Glasfritten, in denen ein Alkalioxid, $B_2O_3$, $Al_3O_3$, $SiO_2$, F, $P_2O_5$, ZnO und $TiO_2$ in einem bestimmten Verhältnis vorhanden sein müssen. Glasfrittenzusammensetzungen enthaltend $Li_2O$, $B_2O_3$, $SiO_2$ und andere Oxide sind in der US-PS 4 446 241 offenbart. Die US-PS 4 537 862 beschreibt Fritten, die $B_2O_3$, $SiO_2$, $ZrO_2$ und Seltenerdmetalloxide enthalten, wobei das Verhältnis zwischen $ZrO_2$ und Seltenerdmetalloxiden kritisch ist. Die US-PS 4 554 258 beschreibt Fritten, die $Bi_2O_3$, $B_2O_3$, $SiO_2$ und Alkalimetalloxide enthalten, wobei letztere in bestimmten hohen Konzentratioen vorhanden sein müssen, und die US-PS 4 590 171 solche, die $Li_2O$, $Na_2O$, BaO, $B_2O_3$, $Al_2O_3$, $SiO_2$, $ZrO_2$ und Fluor enthalten. Weitere Publikationen, die ganz allgemein dieses Thema betreffen sind: US-PS 4 084 976, US-PS 4 224 074, US-PS 4 312 951, US-PS 4 340 645 und US-PS 4 361 654.

Es ist nun gefunden worden, dass Glasfrittenzusammensetzungen, die $SiO_2$, $Bi_2O_3$, Alkalioxide, sowie $ZrO_2$ und/oder $TiO_2$ in bestimmtem Verhältnis enthalten, überraschenderweise eine ungewöhnliche Kombination wünschenswerter Eigenschaften besitzen. Sie genügen dem Grunderfordernis, dass sie zur Herstellung von Glasuren und Emails, ohne Zusatz von Blei und Cadmiumkomponenten, geeignet sind. Zusätzlich besitzen sie niedrige Erweichunspunkte, eine ausreichend geringe Wärmeausdehnung zur Vermeidung von Rissbildungen beim Auftragen auf verschiedenen Substraten, sowie eine geringe Wasserlöslichkeit, die ihre Verwendung in Spritzmitteln auf Wasserbasis erleichtert. Von besonderer Bedeutung ist aber die hervorragende Säurebeständigkeit, insbesondere gegen säurehaltigen Flüssigkeiten, wie z.B. Frucht- und Gemüsesäfte, sowie die Beständigkeit gegen Reinigungsmittel. Diese Glasfrittenzusammensetzungen eignen sich deshalb sehr gut für Glasur- und Emailüberzüge von Glas-, Keramik- und Porzellanwaren verschiedenster Art. Sie können auch in verschiedenen Druckverfahren eingesetzt werden.

Die vorliegende Erfindung betrifft demnach eine blei- und cadmiumfreie Glasfrittenzusammensetzung, die im wesentlichen aus den nachstehend aufgeführten Komponenten in den angegebenen Gew.%-Mengen besteht.

28-31 Gew.% $SiO_2$

2

38-43 Gew.%, bevorzugt 40-43 Gew.% $Bi_2O_3$

12-18 Gew.%, bevorzugt 12-15 Gew.% $B_2O_3$

5,5-7,5 Gew.% Alkalioxid

0- 3,0 Gew.% $ZrO_2$

0- 5,0 Gew.% $TiO_2$

0- 4,0 Gew.% CaO

0-15,0 Gew.% SrO

0-19,0 Gew.% BaO

0- 6,0 Gew.% ZnO

0- 4,0 Gew.% $Al_2O_3$

0- 1,0 Gew.% $WO_3$

0- 1,5 Gew.% $Ce_2O_3$

0-10,0 Gew.% $NO_2$

0- 7,0 Gew.% $Cr_2O_3$

0-15,0 Gew.% CoO

0- 8,0 Gew.% MnO

0-10,0 Gew.% $P_2O_5$

wobei $ZrO_2$ und $TiO_2$ zusammen in einer Menge von 0,3-8, bevorzugt 0,5-4 Gew.% enthalten sein müssen.

Es muss insbesondere festgehalten werden, dass Überzüge, die eine bedeutend grössere Menge an $Bi_2O_3$ als die maximale Mengen von 43 Gew.% enthalten, den gegenwärtigen minimalen Erfordernissen nicht genügen, insbesondere bezüglich Farbbeständigkeit beim Vermischen mit bestimmten Pigmenten in einer Glasur oder einem Email oder bezüglich Beständigkeit gegen Reinigungsmittel. Unter Alkalimetalloxide versteht man $Na_2O$, $K_2O$ und $Li_2O$, wobei $Na_2O$ bevorzugt mindestens 50 Gew.% des Alkalimetalloxidanteils ausmacht. Besonders bevorzugt wird als Alkalimetalloxid nur $Na_2O$ eingesetzt. Die einzelnen Alkalimetalloxide können wie folgt enthalten sein: 0-7,5 Gew.% $Na_2O$; 0-5,5 Gew.% $K_2O$ und 0-3,0 Gew.% $Li_2O$. Der Ersatz von $Na_2O$ durch $K_2O$ erhöht die Glasurtemperatur und die Wärmeausdehnung, während $Li_2O$ eher eine Erniedrigung der Glasurtemperatur bewirkt, andererseits aber Ursache gewisser Wärmespannungen sein kann.

Der Zusatz von $ZrO_2$ und/oder $TiO_2$ ist erforderlich, insbesondere insofern, dass das $ZrO_2$ die Alkali- und Reinigungsmittelbeständigkeit verbessert und das $TiO_2$ die Säurebeständigkeit noch zusätzlich steigert.

CaO, SrO und BaO können zur Erhöhung der Einbrenntemperatur und zur Erniedrigung der Wärmeausdehnung eingesetzt werden, wobei sie zugleich die Beständigkeit gegen chemische Einwirkung erhöhen.

$Cr_2O_3$, CoO und MnO vermitteln der Glasware Farbe. Auch andere den Fachleuten bekannten Farbmittel können zugesetzt werden.

Die Glasfritten werden durch Vermischen der dem Fachmann wohlbekannten oxidbildenden Substanzen, Verschmelzen des erhaltenen Gemisches im Glasschmelzofen bei 100-1300°C zu geschmolzenem Glas und Abschrecken des letzteren durch Eintauchen in Wasser oder Durchleiten in einem wassergekühlten Walzenstuhl hergestellt. Wenn nötig, kann die Fritte durch übliche Mahlmethoden zu Pulver gemahlen werden. Die erhaltenen Produkte haben im allgemeinen Erweichungspunkte zwischen 500 und 650°C und Wärmeausdehnungskoeffiziente zwischen 70 und 90 x $10^{-7}$/°C.

Die Glasfrittenzusammensetzungen der vorliegenden Erfindung eignen sich insbesondere zur Herstellung von Dekorüberzugsmassen für Glaswaren, sie können aber auch für den Überzug von Keramikware eingesetzt werden. Um diese Produkte beispielsweise zur Dekoration von Glaswaren zu verwenden, wird mit einer erfindungsgemässen Fritte, Titandioxid und einem Bindemittel auf Fichtenölbasis für Siebdruck eine Dekorüberzugsmasse hergestellt. Dies wird aussen auf einem Glaskrug oder einer Glasplatte aufgetragen (z.B. durch Siebdruck) und dann während 10 Minuten bei 620°C eingebrannt und anschliessend langsam abgekühlt. Man erhält einen glatten, glasigen, weissen Überzug mit guter Beständigkeit gegen den Einfluss verschiedener sauren und alkalischen Substanzen und Reinigungsmittel, sowie gegen Verfärbungen durch chemische Reduktion. Farbstoffe und Pigmente können zur Herstellung gefärbter Glasuren oder Emails in den erfindungsgemässen Fritten gelöst und/oder suspendiert werden.

Die nachfolgenden Beispiele dienen zur Erläuterung der Erfindung. In diesen Beispielen werden die rohen Glassatzzusammensetzungen nach allgemein bekannten Methoden vermischt, geschmolzen, im allgemeinen bei 1175-1260°C ca. 45 Minuten gebrannt und anschliessend abgeschreckt, um die Glasfrittenzusammensetzung zu erzeugen, die in einer Kugelmühle fein vermahlen wird, und durch Dispergieren in einem Bindemittel auf Fichtenölbasis zu einer Paste verarbeitet wird.

Zu Prüfzwecken werden die erhaltenen Pasten mittels Siebdruck auf Glasplättchen aufgetragen. Letztere werden zur Bestimmung der "Glasur-Temperatur", d.h. der niedrigst möglichen Temperatur, bei der das Glaspulver genügend fliessen kann, um einen glatten, kontinuierlichen Überzug zu bilden, wie im folgenden beschrieben, bei verschiedenen Temperaturen gebrannt.

Jeder Prüfling wird in zwei Laboröfen nach einer Standardmethode gebrannt. Zuerst wird er 10 Minuten auf 426°C vorgeheizt, um das Bindemittel auf Fichtenölbasis zu verflüchtigen, dann wird er in einem zweiten Ofen, der auf die zu testende Glasur-Temperatur eingestellt ist, 15 Minuten behandelt und danach zur Evaluierung entnommen. Wenn, beispielsweise, nach dem Vorheizen ein bestimmter Prüfling bei einer zu testenden Glasur-Temperatur von 605°C 15 Minuten behandelt wird und einen nicht genügend glatten und kontinuierlichen Überzug ergibt, so wird der Test bei einer höheren Temperatur wiederholt.

Die Säurebeständigkeit wird gemäss der Standardmethode ASTM C-724 durch Behandeln der beschichteten und eingebrannten Plättchen mit Zitronensäure bestimmt. Die in der Tabelle angegebenen Noten sind ein Mass für die durch die Zitronensäure verursachte Ätzung. Sie haben folgende Bedeutung:

Note 1 = keine sichtbare Ätzung
Note 2 = leichte Ätzung
Note 3 = Verlust des Oberflächenglanzes
Note 4 = Trübe, matte Oberfläche, ev. Abkreiden
Note 5 = Bedeutende Abtragung des Emails, Kraterbildung
Note 6 = Komplette Abtragung des Emails.

Zur Prüfung der Beständigkeit gegen Reinigungsmittel werden die beschichteten und eingebrannten Plättchen während 24 Stunden bei 95°C in einer konzentrierten Geschirrspühlmittellösung eingetaucht. Die Beständigkeit wird mit den gleichen Noten, wie für die Säurebeständigkeit charakterisiert.

Typische erfindungsgemässe Frittenzusammensetzungen und die entsprechenden gemäss den oben beschrieben Testmethoden bestimmten Gebrauchseigenschaften sind in der nachfolgenden Tabelle aufgeführt.

| Oxid-Komponente | Frittenzusammensetzungen (Gew.%) | | | | |
| --- | --- | --- | --- | --- | --- |
| | Bsp. 1 | Bsp. 2 | Bsp. 3 | Bsp. 4 | Bsp. 5 |
| $SiO_2$ | 30,60 | 29,78 | 29,70 | 28,13 | 28,88 |
| $Bi_2O_3$ | 41,88 | 41,02 | 40,90 | 38,61 | 40,44 |
| $B_2O_3$ | 13,72 | 13,44 | 15,42 | 17,67 | 15,24 |
| $Na_2O$ | 6,35 | 6,23 | 7,11 | 6,71 | 7,02 |
| ZnO | 2,99 | 2,93 | 2,92 | 2,76 | 2,89 |
| $ZrO_2$ | 1,42 | 0,98 | 0,98 | 1,11 | - |
| $TiO_2$ | - | 2,64 | - | 2,21 | 2,60 |
| $NO_2$ | 3,04 | 2,98 | 2,97 | 2,80 | 2,93 |
| Schmelztemperatur | 1205°C | 1205°C | 1175°C | 1205°C | 1175°C |
| Glasurtemperatur | 605°C | 605°C | 615°C | 595°C | 615°C |
| Zitronensäure | 2 | 2 | 2 | 2 | 2 |
| Reinigungsmittel | 2 | 2 | 2 | 2 | 2 |
| Aussehen | gering-fügig geäzt | klar | klar | klar | klar |

**Patentansprüche**

1. Bleifreie Glasfrittenzusammensetzung, bestehend im wesentlichen aus
28-31 Gew.% $SiO_2$
38-43 Gew.% $Bi_2O_3$

12-18 Gew.% $B_2O_3$
5,5-7,5 Gew.% Alkalioxid
0- 3,0 Gew.% $ZrO_2$
0- 5,0 Gew.% $TiO_2$
0- 4,0 Gew.% CaO
0-15,0 Gew.% SrO
0-19,0 Gew.% BaO
0- 6,0 Gew.% ZnO
0- 4,0 Gew.% $Al_2O_3$
0- 1,0 Gew.% $WO_3$
0- 1,5 Gew.% $Ce_2O_3$
0-10,0 Gew.% $NO_2$
0- 7,0 Gew.% $Cr_2O_3$
0-15,0 Gew.% CoO
0- 8,0 Gew.% MnO
0-10,0 Gew.% $P_2O_5$
wobei $ZrO_2$ und $TiO_2$ zusammen in einer Menge von 0,3-8 Gew.% enthalten sein müssen.

2. Glasfrittenzusammensetzung gemäss Anspruch 1 enthaltend
40-43 Gew.% $Bi_2O_3$
12-15 Gew.% $B_2O_3$
und $ZrO_2$ und $TiO_2$ zusammen in einer Menge von 0,5-4 Gew.%.

3. Glasfrittenzusammensetzung gemäss Anspruch 1, worin das Alkalimetalloxid aus der Gruppe bestehend aus Natrium-, Kalium- und Lithiumoxid ausgewählt ist, und die einzelnen Komponenten, wenn in der Zusammensetzung vorhanden, in einer maximalen Konzentration von 3,0 Gew.% $Li_2O$, 5,5 Gew.% $K_2O$ und 7,5 Gew.% $Na_2O$ vorhanden sind.

4. Glasfrittenzusammensetzung gemäss Anspruch 1, worin $Na_2O$ mindestens 50 Gew.% des Alkalimetalloxidanteils beträgt.


**Claims**

1. A lead-free glass frit composition consisting essentially of
28-31 % by weight $SiO_2$
38-43 % by weight $Bi_2O_3$
12-18 % by weight $B_2O_3$
5.5-7.5 % by weight alkali metal oxide
0-3.0 % by weight $ZrO_2$
0-5.0 % by weight $TiO_2$
0-4.0 % by weight CaO
0-15.0 % by weight SrO
0-19.0 % by weight BaO
0-6.0 % by weight ZnO
0-4.0 % by weight $Al_2O_3$
0-1.0 % by weight $WO_3$
0-1.5 % by weight $Ce_2O_3$
0-10.0 % by weight $NO_2$
0-7.0 % by weight $Cr_2O_3$
0-15.0 % by weight CoO
0-8.0 % by weight MnO
0-10.0 % by weight $P_2O_5$
where $ZrO_2$ and $TiO_2$ together must be present in an amount of from 0.3-8% by weight.

2. A glass frit composition according to claim 1 comprising
40-43 % by weight $Bi_2O_3$
12-15 % by weight $B_2O_3$

and ZrO$_2$ and TiO$_2$ together in an amount of from 0.5-4 % by weight.

3. A glass frit composition according to claim 1, in which the alkali metal oxide is selected from the group consisting of sodium, potassium and lithium oxides and the individual components when present in the composition are present in a maximum concentration of 3.0 % by weight Li$_2$O, 5.5 % by weight K$_2$O and 7.5 % by weight Na$_2$O.

4. A glass frit composition according to claim 1, in which Na$_2$O comprises at least 50 % by weight of the alkali metal oxide component.

**Revendications**

1. Composition de fritte vitreuse sans plomb, essentiellement constituée, en proportions pondérales, de :
   28-31% SiO$_2$
   38-43% Bi$_2$O$_3$
   12-18% B$_2$O$_3$
   5,5-7,5% d'oxydes de métaux alcalins
   0-3,0% ZrO$_2$
   0-5,0% TiO$_2$
   0-4,0% CaO
   0-15,0% SrO
   0-19,0% BaO
   0-6,0% ZnO
   0-4,0% Al$_2$O$_3$
   0-1,0% WO$_3$
   0-1,5% Ce$_2$O$_3$
   0-10,0% NO$_2$
   0-7,0% Cr$_2$O$_3$
   0-15,0% CoO
   0,8,0% MnO
   0-10,0% P$_2$O$_5$
   la proportion globale de ZrO$_2$ et TiO$_2$ devant être de 0,3 à 8% en poids.

2. Composition de fritte vitreuse selon la revendication 1 qui comprend :
   40-43% Bi$_2$O$_3$
   12-15% B$_2$O$_3$
   et une proportion globale de ZrO$_2$ et TiO$_2$ de 0,5 à 4% en poids.

3. Composition de fritte vitreuse selon la revendication 1 dont l'oxyde de métal alcalin est pris parmi les oxydes de sodium, potassium et lithium, avec, s'il y a plusieurs de ces oxydes à la fois, une teneur maximale de 3,0% en Li$_2$O, de 5,5% en K$_2$O et de 7,5% en Na$_2$O.

4. Composition de fritte vitreuse selon la revendication 1 dans laquelle l'oxyde de sodium constitue au moins 50% de la proportion totale des oxydes de métaux alcalins.